# EUROPEAN PATENT APPLICATION

(11) **EP 4 319 440 A1**
(43) Date of publication of application: **07.02.2024**
(21) Application number: 21932052.0
(22) Date of filing: 22.03.2021
(51) Int. Cl.: H04W 74/08

(54) **METHOD AND APPARATUS FOR CONFIGURING ACCESS CONTROL INFORMATION, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Ipside
(86) International application number: PCT/CN2021/082207
(87) International publication number: WO 2022/198420

(57) **Abstract**

Embodiments of the present application provide a method and apparatus for configuring access control information, and a terminal device and a network device. The method comprises: a terminal device receives access control information sent by a network device, the access control information comprising camp indication information and/or at least one access control parameter, and the access control information being used for the terminal device to execute an access control operation on the basis of a terminal type.

## Description

### TECHNICAL FIELD

Embodiments of the present disclosure relate to the technical field of mobile communications, and particularly to a method and apparatus for configuring access control information, a terminal device, and a network device.

### BACKGROUND

With continuous expansion of communication scenarios in modern society, the types of terminal devices (simply referred to as terminal types) are continuously increasing. In order to reduce the deployment costs of communication base stations, one cell tends to provide communication services for one or more types of terminal devices at the same time. A large number of terminal devices simultaneously camping on one cell may cause cell resource congestion. However, existing access control mechanisms only perform control according to service types, and cannot address the problem of access priority among the terminal types.

### SUMMARY

Provided in embodiments of the present disclosure are a method and apparatus for configuring access control information, a terminal device, and a network device.

Provided in embodiments of the present disclosure is a method for configuring access control information. The method includes that a terminal device provides access control information sent by a network device. The access control information includes camping indication information and/or at least one access control parameter. The access control information is used for the terminal device to perform an access control operation on the basis of terminal type.

Provided in embodiments of the present disclosure is a method for configuring access control information. The method includes that a network device sends access control information to a terminal device. The access control information includes camping indication information and/or at least one access control parameter. The access control information is used to perform an access control operation on the basis of terminal type.

Provided in embodiments of the present disclosure is an apparatus for configuring access control information, which is applied to a terminal device, and the apparatus comprises a receiving unit configured to receive access control information sent by a network device. The access control information includes camping indication information and/or at least one access control parameter. The access control information is used for a terminal device to perform an access control operation on the basis of terminal type.

Provided in embodiments of the present disclosure is an apparatus for configuring access control information, which is applied to a network device, and the apparatus comprises a sending unit configured to send access control information to a terminal device. The access control information includes camping indication information and/or at least one access control parameter. The access control information is used to perform an access control operation on the basis of terminal type.

Provided in embodiments of the present disclosure is a terminal device, which comprises a processor and a memory storing a computer program, and the processor is configured to call and run the computer program stored in the memory to perform the method for configuring access control information described above.

Provided in embodiments of the present disclosure is a network device, which comprises a processor and a memory storing a computer program, and the processor is configured to call and run the computer program stored in the memory to perform the method for configuring access control information described above.

Provided in embodiments of the present disclosure is a chip, which is configured to implement the method for configuring access control information described above.

Specifically, the chip comprises: a processor configured to call and run a computer program from a memory, to enable a device installed with the chip to perform the method for configuring access control information described above.

Provided in embodiments of the present disclosure is a computer-readable storage medium storing a computer program, the computer program causing a computer to perform the method for configuring access control information described above.

Provided in embodiments of the present disclosure is a computer program product, which comprises computer program instructions, the computer program instructions causing a computer to perform the method for configuring access control information described above.

Provided in embodiments of the present disclosure is a computer program, which, when running on a computer, causes the computer to perform the method for configuring access control information described above.

In the technical solutions of the embodiments of the present disclosure, the network device configures access control information for the terminal device, and the access control information includes camping indication information and/or at least one access control parameter, so that the terminal device can perform an access control operation for a terminal type on the basis of the access control information. By using the technical solutions of the embodiments of the present disclosure, the mechanism for performing access control according to the terminal type is implemented. Since performing access control according to the terminal type may cause certain specific types of terminal devices to have preferential access, the problem of access priority among terminal types is solved.

### BRIEF DESCRIPTION OF THE DRAWINGS

The drawings illustrated here are used to provide a further understanding of the present disclosure, and constitute a part of the present disclosure. The illustrative embodiments of the present disclosure and the description thereof are used to explain the present disclosure, and do not constitute an improper limitation to the present disclosure. In the drawings:
Fig. 1 is a schematic diagram of a communication system architecture according to an embodiment of the present disclosure;
Fig. 2 is a schematic flowchart of a method for configuring access control information according to an embodiment of the present disclosure;
Fig. 3 is a flowchart of acquiring terminal type by a terminal device according to an embodiment of the present disclosure;
Fig. 4 is a first schematic structural composition diagram of an apparatus for configuring access control information according to an embodiment of the present disclosure;
Fig. 5 is a second schematic structural composition diagram of an apparatus for configuring access control information according to an embodiment of the present disclosure;
Fig. 6 is a schematic structural diagram of a communication device according to an embodiment of the present disclosure;
Fig. 7 is a schematic structural diagram of a chip according to an embodiment of the present disclosure; and
Fig. 8 is a schematic block diagram of a communication system according to an embodiment of the present disclosure.

### DETAILED DESCRIPTION

The technical solutions in the embodiments of the present disclosure are described below with reference to the drawings in the embodiments of the present disclosure. Evidently, the described embodiments are part of the embodiments of the present disclosure, rather than all of the embodiments. All other embodiments that are arrived at by a person of ordinary skill in the art on the basis of the embodiments in the present disclosure without involving inventive skill belong to the scope of protection of the present disclosure.

The technical solutions of the embodiments of the present disclosure may be applied to various communication systems, such as Long Term Evolution (LTE) systems, LTE Frequency Division Duplex (FDD) systems, LTE Time Division Duplex (TDD) systems, 5G communications systems, or future communication systems, etc.

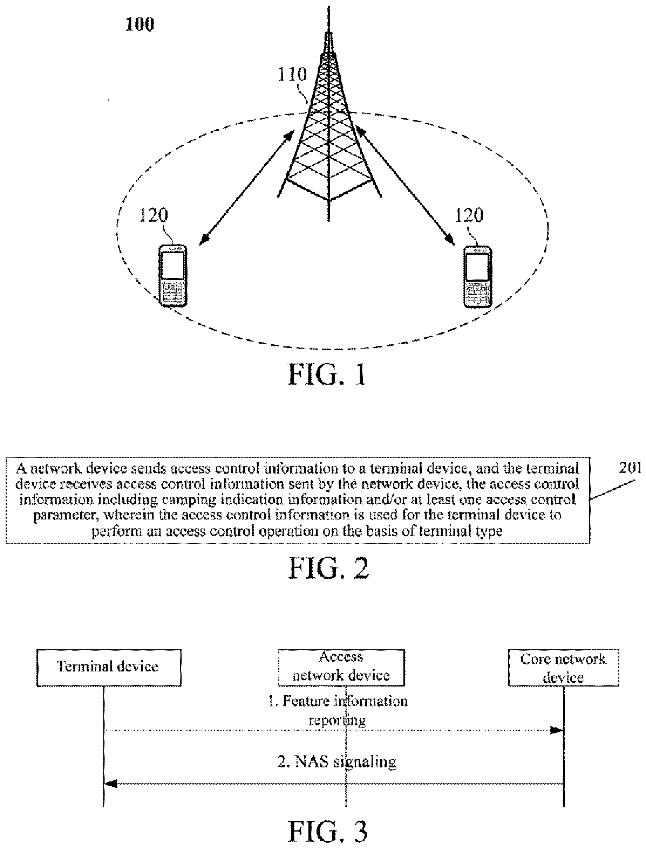

As an example, a communication system 100 applied in an embodiment of the present disclosure is shown in Fig. 1. The communication system 100 may include a network device 110, and the network device 110 may be a device that performs communication with a terminal 120 (or referred to as a communication terminal or a terminal). The network device 110 may provide communication coverage for a particular geographic area, and may perform communication with a terminal located within the coverage area. Optionally, the network device 110 may be an Evolved Node B (eNB or eNodeB) in an LTE system, or a wireless controller in a Cloud Radio Access Network (CRAN), or the network device may be a mobile switching center, a relay station, an access point, a vehicle-mounted device, a wearable device, a hub, a switch, a bridge, a router, a network-side device in a 5G network or a network device in a future communication system, etc.

The communication system 100 further includes at least one terminal 120 within the coverage range of the network device 110. The "terminal" as used herein includes, but is not limited to, an apparatus configured to receive/send a communication signal and/or an Internet of Things (IoT) device, which may be connected via a wired line, such as a Public Switched Telephone Network (PSTN), a Digital Subscriber Line (DSL), a digital cable, and a direct cable connection; and/or via another data connection/network; and/or via a wireless interface, such as a cellular network, a wireless local area network (WLAN), a digital TV network such as a DVB-H network, a satellite network or an AM-FM broadcast transmitter; and/or another terminal. A terminal configured to perform communication by means of a wireless interface may be referred to as a "wireless communication terminal", a "wireless terminal" or a "mobile terminal". Examples of the mobile terminal include, but are not limited to, a satellite or cellular phone; a Personal Communications System (PCS) terminal that can combine a cellular radio phone with data processing, fax, and data communication capability; a PDA that may include a radio phone, a pager, Internet/intranet access, a Web browser, a memo pad, a calendar, and/or a Global Positioning System (GPS) receiver; and a conventional laptop and/or handheld receiver or other electronic apparatuses including radio telephone transceivers. The terminal may refer to an access terminal, a user equipment (UE), a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G network, a terminal device in a future evolved PLMN, or the like.

Optionally, Device to Device (D2D) communication may be performed between the terminals 120.

Optionally, the 5G communication system or the 5G network may also be referred to as a New Radio (NR) system or an NR network.

Fig. 1 illustratively shows one network device and two terminals. Optionally, the communication system 100 may include a plurality of network devices, and the coverage range of each network device may include other numbers of terminals. The embodiment of the present disclosure is not limited thereto.

Optionally, the communication system 100 may further include a network controller, a mobile management entity, and other network entities. The embodiment of the present disclosure is not limited thereto.

It should be understood that a device having a communication function in the network/system in the embodiment of the present disclosure may be referred to as a communication device. Taking the communication system 100 shown in Fig. 1 an example, the communication device may include a network device 110 and a terminal 120 that have a communication function. The network device 110 and the terminal 120 may be the specific devices described above, which will not be repeated here. The communication device may also include other devices in the communication system 100, such as a network controller, a mobile management entity and other network entities. The embodiment of the present disclosure is not limited thereto.

It is to be understood that the terms "system" and "network" herein are often used interchangeably herein. The term "and/or" herein is merely to describe the associations of associated objects, indicating that there can be three kinds of relationships. For example, A and/or B can indicate three situations in which A exists alone, A and B exist simultaneously, or B exists alone. In addition, the character "j" herein generally indicates that the associated objects before and after this character are in an "or" relationship.

To facilitate the understanding of the technical solutions of the embodiments of the present disclosure, the following related technologies of the embodiments of the present disclosure are described below. The following related technologies can be arbitrarily combined with the technical solutions of the embodiments of the present disclosure as optional solutions, all of which belong to the scope of protection of the embodiments of the present disclosure.

### • Overview of 5G technology

With people's pursuit of speed, delay, high-speed mobility and energy efficiency, and the diversity and complexity of services in future life, the 3^{rd} Generation Partnership Project (3GPP) international standards organization began to develop 5G. The main application scenarios of 5G are: enhanced Mobile Broadband (eMBB), Ultra-Reliable Low-Latency Communications (URLLC), and massive Machine-Type Communications (mMTC).

On the one hand, eMBB is still aimed at users obtaining multimedia content, services and data, and its requirements are growing rapidly. On the other hand, since eMBB may be deployed in different scenarios, such as indoors, in urban areas, in rural areas etc., the capabilities and requirements thereof vary greatly, and so cannot be generalized and must be analyzed in detail in combination with specific deployment scenarios. Typical applications for URLLC include: industrial automation, power automation, remote medical operations (surgery), traffic security protection, etc. Typical characteristics of mMTC include: high connection density, small data amount, latency-insensitive traffic, low cost and long lifetime of modules, etc.

In order to reduce air interface signaling, quickly restore wireless connections, and quickly restore data services, 5G defines a new Radio Resource Control (RRC) state, i.e., an RRC inactive (RRC_INACTIVE) state. This state is different from an RRC idle (RRC_IDLE) state and an RRC active (RRC_ACTIVE) state. Among them, RRC_IDLE state (simply referred to as idle state): mobility is terminal device-based cell selection and reselection, paging is initiated by a Core Network (CN), and paging areas are configured by the CN. There is no terminal device context on the base station side, and there is no RRC connection.

RRC_CONNECTED state (simply referred to as connected state): there is an RRC connection, and there is a terminal device context on a base station side and a terminal device side. A network side knows that the location of a terminal device is at the level of a specific cell. Mobility is controlled by the network side. Unicast data may be transmitted between the terminal device and a base station.

RRC_INACTIVE state (simply referred to as an inactive state): mobility is terminal device-based cell selection and reselection; there is a connection between the CN and NR; the terminal device context exists on a base station; paging is triggered by the RAN; RAN-based paging areas are managed by the RAN; and the network side knows that the location of the terminal device is at the level of a RAN-based paging area.

### • Schematic NR network deployment

In order to increase the flexibility of non-public networks (NPN) deployment, NPNs can be divided into Stand-alone Non-public Networks (SNPN) and Closed Access Groups (CAG). An SNPN network is identified by PLMN ID+NID, and a CAG network is identified by PLMN ID+CAG ID. It should be pointed out that the PLMN ID+NID may also be understood as an SPNN ID.

A Public Land Mobile Network (PLMN) can simultaneously support any network sharing combination mode of a common public network, an SNPN network, and a CAG network, wherein a common public network is identified by a PLMN ID. For example, a PLMN may support a common public network or a SNPN network or a CAG network alone, or may support the common public network to share a PLMN network with the SNPN network, and even it is allowed that the common public network, the SNPN network, and the CAG network share a PLMN network at the same time. A network identifier configuration that may be supported by a cell is schematically shown in Table 1 below. Each parameter N/M/W in Table 1 is greater than equal to 1. The logical deployment relationships among the common public network, the SNPN network, and the CAG network may be more clearly reflected by means of Table 1:

**Table 1**

| | | | |
|---|---|---|---|
| Network identification information broadcast by a cell | Public Network PLMN ID list information | PLMN ID 1 | |
| | | PLMN ID 2 | |
| | | ... | |
| | | PLMN ID N | |
| | Non-public network NPN network identifier list information (optional) | PLMN ID (N+1) | CAG ID list 1 |
| | | PLMN ID (N+2) | CAG ID list 2 |
| | | ... | ... |
| | | PLMN ID (N+M) | CAG ID list M |
| | | PLMN ID (N+M+1) | NID list 1 |
| | | PLMN ID (N+M+2) | NID list 2 |
| | | ... | ... |
| | | PLMN ID (N+M+W) | NID list W |

As shown in Table 1, from the perspective of network configuration, a cell can configure the PLMN ID list information of the public network and the NPN network identifier list information of the non-public network at the same time, but the NPN network identifier list information of the non-public network is an optional configuration. For a non-public network of the CAG type, one PLMN ID is allowed to be associated with one CAG ID list; for a non-public network of the SNPN type, one PLMN ID is allowed to be associated with one Network Identifier (NID) list.

### •Access control mechanism

The access control mechanism for an access network includes two levels: cell level and service type level. The foregoing is described below.

Access control mechanism of the cell level: the main purpose of the access control mechanism of the cell level is to indicate whether the terminal device can camp on the cell. As an example, a cell sends a system broadcast message, the system broadcast message carries camping barring indication information, and if the camping barring indication information indicates a barred state, any terminal device cannot camp on the cell. The system broadcast message is, for example, a Main Information Block (MIB).

Access control mechanisms of the service type level: the main purpose of the access control mechanism of the service type level is to control different types of services to access a current serving cell at different success probabilities, thereby reducing the likelihood of system resource congestion. Of course, a terminal device performing access control of the service type level must not be barred from camping by the access control mechanism of the cell level.

With the continuous expansion of communication scenarios in modern society, the types of terminal devices (simply referred to as terminal types) are continuously increasing, such as: NB-IoT terminal types, eMTC terminal types, eMBB terminal types, IIoT terminal types, etc. In order to save the deployment cost of communication base stations, one cell tends to provide communication services for one or more types of terminal devices at the same time. A large number of terminal devices simultaneously camping on one cell may cause cell resource congestion. However, the existing access control mechanisms only perform control according to service types, and cannot address the problem of access priority among the terminal types. For this reason, the following technical solutions of the embodiments of the present disclosure are proposed.

It should be noted that a "terminal device" described in the embodiments of the present disclosure may also be replaced with a "terminal" or a "user equipment".

Fig. 2 is a schematic flowchart of a method for configuring access control information according to an embodiment of the present disclosure. As shown in Fig. 2, the method for configuring access control information includes the following operation.

In operation 201, a network device sends access control information to a terminal device, and the terminal device receives access control information sent by the network device. The access control information includes camping indication information and/or at least one access control parameter. The access control information is used for the terminal device to perform an access control operation on the basis of terminal type.

In an embodiment of the present disclosure, the access control information is sent by the network device to the terminal device by means of AS signaling. The network device here refers to an access network device, such as a base station. In some optional implementations, the AS signaling may be a system broadcast message or dedicated signaling. Further, dedicated signaling may be, for example, RRC signaling.

In an embodiment of the present disclosure, the access control information refers to access control related information configured for a terminal type. The access control information includes camping indication information and/or at least one access control parameter.

In some optional implementations, the access control information includes camping indication information.

In some optional implementations, the access control information includes camping indication information and at least one access control parameter.

The content included in the access control information will be described in detail below.

### • Camping indication information

In an embodiment of the present disclosure, the camping indication information may be sent by the network device to the terminal device by means of AS signaling. In some optional implementations, the AS signaling may be a system broadcast message or dedicated signaling. Further, dedicated signaling may be, for example, RRC signaling.

### A) Configuration manner of camping indication information

In an embodiment of the present disclosure, the camping indication information may be configured according to granularity of a cell or granularity of a network identifier. Each of foregoing is described below.
1) The camping indication information is configured according to the granularity of the cell.

When the camping indication information is configured according to the granularity of the cell, different cells are associated with different camping indication information. For example, cell 1 is associated with camping indication information 1, and cell 2 is associated with camping indication information 2. For one cell, its associated camping indication information is used for the terminal device to determine, on the basis of its terminal type, whether it can camp on a network corresponding to the cell.

In one example, in a network sharing scenario, one cell may support a plurality of operator networks (which are usually identified by configuring a plurality of network identifiers in one cell). For this scenario, the network corresponding to one cell includes a plurality of operator networks supported by the cell. The camping indication information is configured according to the granularity of the cell, and the camping indication information is applicable to all the operator networks supported by the cell.

Table 2 schematically shows that the camping indication information is configured according to the granularity of the cell. Cell-level configuration information includes at least camping indication information and other cell-level configuration information. The other cell-level configuration information is, for example, a camping cell frequency configuration, a camping cell BWP configuration, etc. Since the camping indication information in Table 2 belongs to the cell-level configuration information, it is applicable to all the operator networks supported by the cell.

**Table 2**

| | | |
|---|---|---|
| Cell-level configuration information | Camping indication Information | |
| | Other cell-level configuration information | Camping cell frequency configuration |
| | | Camping cell BWP configuration |
| | | ... |

2) The camping indication information is configured according to the granularity of the network identifier.

When the camping indication information is configured according to the granularity of the network identifier, different network identifiers are associated with different camping indication information. For example, network identifier 1 is associated with camping indication information 1, and network identifier 2 is associated with camping indication information 2. For one network identifier, its associated camping indication information is used for the terminal device to determine, on the basis of terminal type of the terminal device, whether the terminal device can camp on a network corresponding to the network identifier.

In some optional implementations, the network identifier includes at least one of the following: a PLMN identifier (PLMN ID), an SNPN identifier (SNPN ID), or a CAG identifier (CAG ID). The PLMN ID may identify a common public network, the SNPN ID may identify a SNPN network, and the PLMN ID+CAG ID may identify a CAG network.

In one example, in a network sharing scenario, one cell may support a plurality of operator networks (which are usually identified by configuring a plurality of network identifiers in one cell). For this scenario, the network corresponding to one cell includes a plurality of operator networks supported by the cell. The camping indication information is configured according to the granularity of the network identifier, and the camping indication information is applicable to a network corresponding to the network identifier.

Table 3 schematically shows that the camping indication information is configured according to the granularity of the network identifier. The cell-level configuration information includes at least network identifier related configuration information and other cell-level configuration information. In a network sharing scenario, one cell may support a plurality of operator networks. Table 3 takes a cell simultaneously supporting two PLMN networks, two SNPN networks and two CAG networks as an example, in which the PLMN networks are identified by PLMN IDs, the SNPN networks are identified by SNPN IDs, and the CAG networks are identified by PLMN ID + CAG IDs. Further, an SPNN ID is identified by a PLMN ID+NID. Since each piece of camping indication information in Table 3 is associated with one network identifier, each piece of camping indication information is applicable to a network corresponding to the one network identifier.

**Table 3**

| | | | | |
|---|---|---|---|---|
| Cell-level configuration information | Network identifier related configuration information | PLMN related configuration | PLMN ID 1 | Camping indication information 1 |
| | | | PLMN ID2 | Camping indication information 2 |
| | | SNPN-related configuration | SNPN ID1 | Camping indication information 3 |
| | | | SNPN ID2 | Camping indication information 4 |
| | | CAG-related configuration | PLMN ID3+CAG ID1 | Camping indication |
| | | | | information 5 |
| | | | PLMN ID4+CAG ID2 | Camping indication information 6 |
| | Other cell-level configuration information | Camping cell frequency configuration | N/A | |
| | | Camping cell BWP configuration | | |
| | | ... | | |

### B) Content of camping indication information

In an embodiment of the present disclosure, the camping indication information is used for the terminal device to determine, according to terminal type of the terminal device, whether the terminal device can camp on a network provided by the network device.

Specifically, the camping indication information includes at least one bit, each of the at least one bit is associated with at least one terminal type, and a value of the bit indicates whether a terminal device corresponding to the at least one terminal type associated with the bit can camp on the network provided by the network device.

The value of the bit being first value indicates that the terminal device corresponding to the at least one terminal type associated with the bit can camp on the network provided by the network device; and the value of the bit being a second value indicates that the terminal device corresponding to the at least one terminal type associated with the bit is barred from camping on the network provided by the network device. As an example, the first value is 1, and the second value is 0; or, the first value is 0, and the second value is 1.

Table 4 schematically shows the content of camping indication information. The camping indication information includes N bits, where N is a positive integer greater than or equal to 1. Each of the N bits is associated with at least one terminal type, and the value of the bit determines whether a terminal device corresponding to the at least one terminal type associated with the bit can camp on the network provided by the network device. For example, bit 1 is associated with terminal type 1, and bit 2 is associated with terminal types 2 and 3. If the value of bit 1 is 1, and the value of bit 2 is 0, it indicates that a terminal device corresponding to terminal type 1 is barred from camping on the network provided by the network device, whereas terminal devices corresponding to terminal types 2 and 3 can camp on the network provided by the network device. Of course, the present disclosure does not exclude the situation where the value meanings of the bits are contrary to the above function description.

**Table 4**

| | |
|---|---|
| Camping indication Information | Bit 1 |
| | Bit 2 |
| | ... |
| | Bit N |

### C) associations between bits in camping indication information and terminal types

In an embodiment of the present disclosure, the bits in the camping indication information and the terminal types have associations (or referred to as mapping relationships), and the association between each bit in the camping indication information and the terminal type is a first association.

In some optional implementations, the first association is predefined. For example, a protocol specifies the associations between the bits in the camping indication information and the terminal types.

In some optional implementations, the first association is configured by a network side through access stratum (AS) signaling. The network side here refers to an access network device, such as a base station. In some optional implementations, the AS signaling may be a system broadcast message or dedicated signaling. Further, dedicated signaling may be, for example, RRC signaling.

In an embodiment of the present disclosure, one bit in the camping indication information may be associated with one or more terminal types. It should be noted that the number of terminal types associated with different bits in the camping indication information may be different, or may be the same.

In one example, the first association is in a one-to-one form, that is, one bit in the camping indication information is associated with one terminal type. Table 5 schematically shows associations between bits included in the camping indication information and terminal types, here, the associations are in a one-to-one form, that is, one bit is associated with one terminal type.

**Table 5**

| | |
|---|---|
| Camping indication information bit 1 | Terminal type 1 |
| Camping indication information bit 2 | Terminal type 2 |
| ... | ... |
| Camping indication information bit M | Terminal type M |

In one example, the first association is in a one-to-multiple form, that is, one bit in the camping indication information is associated with multiple terminal types. Table 6 schematically shows associations between bits included in the camping indication information and terminal types, and the associations are in a one-to-multiple form, that is, one bit is associated with multiple terminal types. In Table 6, the terminal types including 6 terminal types are illustrated as an example.

**Table 6**

| | |
|---|---|
| Camping indication information bit 1 | Terminal type information 1 |
| | Terminal type information 2 |
| Camping indication information bit 2 | Terminal type information 3 |
| | Terminal type information 4 |
| | Terminal type information 5 |
| | Terminal type information 6 |

### • At least one access control parameter

In an embodiment of the present disclosure, each of the at least one access control parameter includes at least one of the following:
a first parameter for determining whether a single access attempt has passed; or
a second parameter for determining a length of time from a time point when an access attempt is barred to a time point when another access attempt is initiated.

Here, the first parameter may also be understood as a probability parameter for a terminal device's single access to the network. The terminal device may determine, according to the first parameter, whether a single access attempt has passed. In a specific implementation, during an access attempt, the terminal device generates a random number between 0 and 1. If the random number is less than the first parameter, then the access attempt has passed; and if the random number is greater than the first parameter, then the access attempt is barred. As an example, the first parameter is 0.8, and each access attempt initiated by the terminal device may pass at a probability of 80%, which represents that the probability of the terminal device's single access to the network is 0.8.

Here, the second parameter may also be understood as a waiting time window parameter. The terminal device may determine, according to the second parameter, how long it takes to initiate another access attempt again after the current access attempt is barred. The second parameter may explicitly indicate a length of time, or may implicitly indicate a length of time. As an example, if the second parameter indicates X1 (e.g., 3), the terminal device needs to wait for X1 seconds after an access attempt is barred and before another access attempt is initiated. As an example, the terminal device needs to wait for X2 seconds after an access attempt is barred and before another access attempt is initiated. X2 is obtained by means of a formula related to the second parameter, e.g., X2=(a1+a2×random number)×second parameter, where a1 and a2 are constants, for example, a1 is 0.7, and a2 is 0.6.

### • Associations between camping indication information and at least one access control parameter

In an embodiment of the present disclosure, when the access control information includes camping indication information and at least one access control parameter, there are associations (or referred to as mapping relationships) between bits in the camping indication information and the access control parameter. The association between at least one bit in the camping indication information and the at least one access control parameter is a second association. The second association includes the following at least one relationship: each of the at least one bit is associated with one of the at least one access control parameter; and one or more of the at least one bit are associated with one of the at least one access control parameter.

In some optional implementations, the second association is predefined. For example, a protocol specifies the associations between bits in the camping indication information and the access control parameter.

In some optional implementations, the second association is configured by a network side through AS signaling. The network side here refers to an access network device, such as a base station. In some optional implementations, the AS signaling may be a system broadcast message or dedicated signaling. Further, dedicated signaling may be, for example, RRC signaling.

In an embodiment of the present disclosure, one bit in the camping indication information may be associated with one access control parameter, or multiple bits in the camping indication information are associated with one access control parameter.

In one example, the second association is in a one-to-one form, that is, one bit in the camping indication information is associated with one access control parameter. Table 7 schematically shows associations between bits included in the camping indication information and the access control parameters, here, the associations are in a one-to-one form, that is, one bit is associated with one access control parameter.

**Table 7**

| | |
|---|---|
| Camping indication information bit 1 | Access control parameter 1 |
| Camping indication information bit 2 | Access control parameter 2 |
| ... | ... |
| Camping indication information bit M | Access control parameter M |

In one example, the second association is in a multiple-to-one form, that is, multiple bits in the camping indication information are associated with one access control parameter. Table 8 schematically shows associations between bits included in the camping indication information and the access control parameters, here, the associations are in a multiple-to-one form, that is, multiple bits are associated with one access control parameter. In Table 8, the camping indication information including 6 bits is illustrated as an example.

**Table 8**

| | |
|---|---|
| Camping indication information bit 1 | Access control parameter 1 |
| Camping indication information bit 2 | |
| Camping indication information bit 3 | Access control parameter 2 |
| Camping indication information bit 4 | |
| Camping indication information bit 5 | |
| Camping indication information bit 6 | |

It should be noted that for each access control parameter, the first and/or second parameters described in the foregoing related solutions may be included.

### • A terminal device performs an access control operation on the basis of access control information

### Behavior 1:

In an embodiment of the present disclosure, the terminal device determines that the terminal type of the terminal device is a first terminal type; the terminal device determines, on the basis of the first association, that the first terminal type is associated with a first bit in the camping indication information; and the terminal device determines, on the basis of the value of the first bit, whether the terminal device can camp on a network provided by a network device.

Here, the terminal device may determine, by the following method, which terminal type the terminal device belongs to.

Method 1: The terminal device determines its corresponding terminal type through a capability supported by the terminal device or a protocol predefinition.

Specifically, the terminal device determines, on the basis of the capability supported by the terminal device, that the terminal type of the terminal device is the first terminal type; or, the terminal device determines, on the basis of predefined information, that the terminal type of the terminal device is the first terminal type.

Here, several terminal types may be directly specified in a protocol, such as: NB-IoT terminal type, eMTC terminal type, eMBB terminal type, IIoT terminal type, etc. The specified principles may take into account the capability supported by the terminal device, so that the terminal device can determine which terminal type the terminal device belongs to according to its own capability. Alternatively, when the terminal device leaves the factory, the terminal type of the terminal device is directly built into the terminal device as predefined information, so that the terminal device can determine which terminal type the terminal device belongs to according to the predefined information.

In some optional implementations, the capability supported by the terminal device include at least one of the following: a maximum transmission power level supported by the terminal device; an application scenario supported by the terminal device; a dual connectivity capability supported by the terminal device; a carrier aggregation capability supported by the terminal device; a bandwidth combination capability supported by the terminal device; a bandwidth supported by the terminal device; whether the terminal device supports receiving a service in an operator network subscribed by the terminal device; the number of transmitting antennas supported by the terminal device; or the number of receiving antennas supported by the terminal device.

An application scenario supported by the terminal device is, for example, only supporting satellite communication capabilities, only supporting ground communication capabilities, or supporting both ground and satellite communication capabilities.

As an example, terminal devices are divided into several terminal types only according to the number of transmitting antennas and/or receiving antennas supported by the terminal devices. For example, terminal devices having only one transmitting antenna and only one receiving antenna belong to terminal type 1; terminal devices having only one transmitting antenna and two receiving antennas belong to terminal type 2; terminal devices having only one transmitting antenna and four or more receiving antennas belong to terminal type 3; and terminal devices having two or more transmitting antennas belong to terminal type 4.

As an example, two or more dimensions may be simultaneously taken into account for the classification of terminal types. For example, terminal devices supporting the maximum transmission power of P1 and supporting the minimum bandwidth of B1 belong to terminal type 1, and terminal devices supporting the maximum transmission power of P2 and supporting the minimum bandwidth of B2 belong to terminal type 2. The logic of classifying the terminal types in more dimensions is similar to the above example, and will not be repeated here.

Method 2: A terminal device obtains its corresponding terminal type through an NAS process.

Specifically, the terminal device receives non-access stratum (NAS) signaling sent by a network side, and the NAS signaling indicates that the terminal type of the terminal device is a first terminal type. The terminal device determines, on the basis of the NAS signaling, that the terminal type of the terminal device is the first terminal type. The network side here refers to a core network device.

As an example, with reference to Fig. 3, the core network device sends NAS signaling to the terminal device, and the terminal device obtains the terminal type of the terminal device through NAS signaling. Optionally, the terminal device may report its own feature information to the core network device, so that the core network device may assign the terminal type of the terminal device according to the feature information of the terminal device, and issue the assigned terminal type to the terminal device through NAS signaling.

It should be noted that in terms of the manner in which the terminal device obtains the terminal type through NAS signaling, the terminal type is not fixed, but is flexibly assigned by the core network device. For example, when terminal device A receives a service in core network 1, core network 1 considers that terminal device A belongs to terminal type 1, and notifies terminal device A of belonging to terminal type 1 through NAS signaling; and when terminal device A receives a service in core network 2, and core network 2 considers that terminal device A belongs to terminal type 2, and notifies terminal device A that the terminal device A belongs to terminal type 2 through NAS signaling.

The manner in which the terminal type is determined by means of the core network device is flexible and safe. Of course, before the terminal device receives the terminal type sent by the core network device through NAS signaling, the terminal device may also report the feature information of the terminal device itself to the core network device through uplink NAS signaling. These feature information include at least the capabilities of the terminal device, such as: CA capability, DC capability, supported bandwidth combination, etc. The feature information may further include terminal device factory version information, manufacturer pre-configuration information or the like. It should be emphasized that when the core network device generates terminal type information, it does not necessarily depend on the feature information reported by the terminal device. That is to say, operation 1 in Fig. 3 is an optional operation. As can be seen, when the core network device generates the terminal type information, both the feature information reported by the terminal device and the local policy information of the core network may be taken into account; or, when the core network device generates the terminal type information, only the local policy information of the core network is taken into account. The present disclosure is not limited thereto.

The local policy information of the core network described above may include some policy information of the operator and some home access control policy information of the core network.

### Behavior 2:

In an embodiment of the present disclosure, after a terminal device determines, on the basis of the value of the first bit, whether the terminal device can camp on the network provided by the network device, there may be several behaviors. It should be noted that among the following several behaviors, behavior 2-1 is performed, behavior 2-2 and behavior 2-3 are not performed; or, when at least one of behavior 2-2 or behavior 2-3 is performed, behavior 2-1 is not performed. In addition, only one of behavior 2-2 and behavior 2-3 may be performed, or both may be performed.

It should be noted that in the following description, "can camp" may also be expressed as "allow to camp" or "allow to access", and "camp barred" may also be expressed as "access barred".

### Behavior 2-1:

If the terminal device determines, on the basis of the value of the first bit, that the terminal device can camp on the network provided by the network device, the terminal device determines, on the basis of the second association, that the first bit is associated with a first access control parameter of the at least one access control parameter. The terminal device determines, on the basis of the first access control parameter, whether an access attempt has passed, and sends a signal to the network device if the access attempt has passed.

Here, the terminal device determines, on the basis of the first access control parameter, whether the access attempt has passed, for which reference may be made to the foregoing description regarding the "first parameter and/or second parameter of access control parameters", and the details thereof will not be repeated here.

Here, if the terminal device determines, on the basis of the first access control parameter, that the access attempt has passed, the terminal device sends the signal to the network device. In an alternative, the signal sent by the terminal device may be Msg1 (i.e., a preamble) in a 4-step random access procedure. In another alternative, the signal sent by the terminal device may be MsgA (i.e., the preamble+PUSCH) in a 2-step random access procedure. In yet another alternative, the signal sent by the terminal device may be a PUSCH.

### Behavior 2-2:

If the terminal device determines, on the basis of the value of the first bit, that the terminal device is barred from camping on the network provided by the network device, then there may be the following options.

Option 1: the terminal device determines, on the basis of intra-frequency search indication information in a system broadcast message, whether an intra-frequency search is allowed. If it is determined that the intra-frequency search is allowed, the terminal device performs the intra-frequency search; and if it is determined that the intra-frequency search is not allowed, the terminal device is barred from the intra-frequency search within a period of time. Here, the intra-frequency refers to a a frequency as a cell frequency used by the network device; or,

Option 2: the terminal device determines, on the basis of protocol regulations, that the intra-frequency search is not allowed and the terminal device is barred from the intra-frequency search within a period of time. The intra-frequency refers to a same frequency as the cell frequency used by the network device.

It should be noted that behavior 2-2 corresponds to the intra-frequency behavior. If the terminal device determines, on the basis of the value of the first bit, that the terminal device is barred from camping on the network provided by the network device, the terminal device may decide, according to the intra-frequency search indication information in the system broadcast message (e.g., MIB), to perform the intra-frequency search, or is barred from the intra-frequency search within a period of time; or, the terminal device is barred from the intra-frequency search within a period of time according to the protocol regulations.

### Behavior 2-3

If the terminal device determines, on the basis of the value of the first bit, that the terminal device is barred from camping on the network provided by the network device, the terminal device determines, on the basis of inter-frequency search assistance information in a system broadcast message, one or more different frequencies for search. Here, the one or more different frequencies refer to one or more frequencies that are different from the cell frequency used by the network device.

It should be noted that behavior 2-3 corresponds to the inter-frequency behavior. If the terminal device determines, on the basis of the value of the first bit, that the terminal device is barred from camping on the network provided by the network device, the terminal device may decide, according to the inter-frequency search assistance information provided in the system broadcast message (e.g., MIB or SIB), which different frequencies are preferentially searched.

In some optional implementations, the inter-frequency search assistance information includes at least one of the following information of one or more different frequencies: frequency identification information, at least one piece of physical cell ID (PCI) information associated with the frequency identification information, sub-carrier spacing (SCS) information associated with the frequency identification information, frequency-band identification information associated with the frequency identification information, measurement window configuration information associated with the frequency identification information, or measurement window configuration correction assistance information associated with the frequency identification information.

The above measurement window refers to a measurement window of a reference signal. Taking the reference signal as a synchronization signal block (SS/PBCH block, SSB) as an example, the measurement window is an SS/PBCH block measurement timing configuration (SMTC) window. The reference signal is not limited thereto, and the reference signal may also be of other types, such as a channel state information reference signal (CSI-RS).

With the technical solution of the embodiment of the present disclosure, not only an access control mechanism for a large number of terminal devices with different requirements is achieved, but also the system resource congestion probability is reduced while imparting more flexibility to the access control mechanism for the core network.

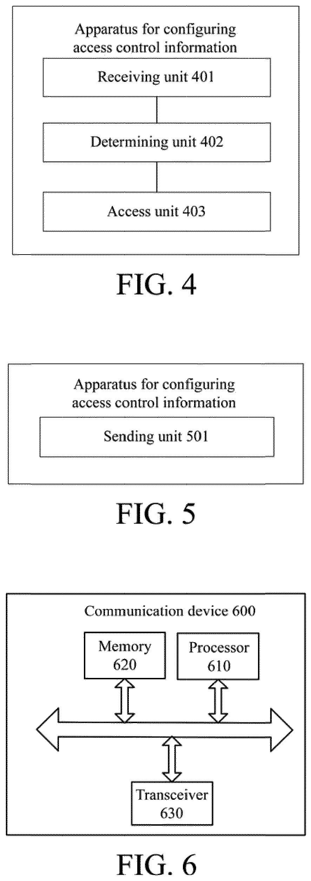

Fig. 4 is a first schematic structural composition diagram of an apparatus for configuring access control information according to an embodiment of the present disclosure, which is applied to a terminal device. As shown in Fig. 4, the apparatus for configuring access control information includes a receiving unit 401.

The receiving unit 401 is configured to receive access control information sent by a network device. The access control information includes camping indication information and/or at least one access control parameter. The access control information is used for the terminal device to perform an access control operation on the basis of a terminal type.

In some optional implementations, the camping indication information is configured according to granularity of a cell, or the camping indication information is configured according to granularity of a network identifier.

In some optional implementations, the network identifier includes at least one of the following: a PLMN identifier, an SNPN identifier, or a CAG identifier.

In some optional implementations, each of the at least one access control parameter includes at least one of the following:
a first parameter for determining whether a single access attempt has passed; or
a second parameter for determining a length of time from a time point when an access attempt is barred to a time point when another access attempt is initiated.

In some optional implementations, the camping indication information includes at least one bit, each of the at least one bit is associated with at least one terminal type, and a value of the bit indicates whether a terminal device corresponding to the at least one terminal type associated with the bit can camp on the network provided by the network device.

In some optional implementations, the association between each bit in the camping indication information and the terminal type is a first association;
the first association is predefined; or,
the first association is configured by a network side through AS signaling.

In some optional implementations, the apparatus further includes a determining unit 402.

The determining unit 402 is configured to determine that the terminal type of the terminal device is a first terminal type; determine, on the basis of the first association, that the first terminal type is associated with a first bit in the camping indication information; and determine, on the basis of the value of the first bit, whether the terminal device can camp on a network provided by the network device.

In some optional implementations, the determining unit 402 is configured to determine, on the basis of a capability supported by the terminal device, that the terminal type of the terminal device is the first terminal type; or determine, on the basis of predefined information, that the terminal type of the terminal device is the first terminal type.

In some optional implementations, the capability supported by the terminal device includes at least one of the following:
a maximum transmission power level supported by the terminal device;
an application scenario supported by the terminal device;
a dual connectivity capability supported by the terminal device;
a carrier aggregation capability supported by the terminal device;
a bandwidth combination capability supported by the terminal device;
a bandwidth supported by the terminal device;
whether the terminal device supports receiving a service in an operator network subscribed by the terminal device;
the number of transmitting antennas supported by the terminal device; and
the number of receiving antennas supported by the terminal device.

In some optional implementations, the receiving unit 401 is further configured to receive NAS signaling sent by a network side, wherein the NAS signaling indicates that the terminal type of the terminal device is a first terminal type; and
the determining unit 402 is configured to determine, on the basis of the NAS signaling, that the terminal type of the terminal device is the first terminal type.

In some optional implementations, when the access control information includes camping indication information and at least one access control parameter,
at least one bit of the camping indication information and the at least one access control parameter have a second association, and the second association includes at least one of the following relationships:
each of the at least one bit is associated with one of the at least one access control parameter; or
one or more of the at least one bit are associated with one of the at least one access control parameter.

In some optional implementations, the second association is predefined; or, the second association is configured by the network side through AS signaling.

In some optional implementations, the determining unit 402 is further configured to determine, on the basis of the second association, that the first bit is associated with a first access control parameter of the at least one access control parameter, in response to determining on the basis of the value of the first bit that the terminal device can camp on the network provided by the network device.

The apparatus further includes an access unit 403, configured to determine, on the basis of the first access control parameter, whether an access attempt has passed, and sending a signal to the network device in response to the access attempt having passed.

In some optional implementations, the determining unit 402 is further configured to determine, on the basis of intra-frequency search indication information in a system broadcast message, whether an intra-frequency search is allowed, in response to determining on the basis of the value of the first bit that the terminal device is barred from camping on the network provided by the network device.

The apparatus further includes a search unit (not shown in the figure) configured to perform the intra-frequency search in response to determining that the intra-frequency search is allowed; and is barred from the intra-frequency search within a period of time in response to determining that the intra-frequency search is not allowed,
wherein the intra-frequency refers to a same frequency as a cell frequency used by the network device.

In some optional implementations, the determining unit 402 is further configured to determine, on the basis of protocol regulations, whether intra-frequency search is allowed, in response to determining on the basis of the value of the first bit that the terminal device is barred from camping on the network provided by the network device.

The apparatus further comprises a search unit configured to bar the intra-frequency search within a period of time;
wherein the intra-frequency refers to a same frequency as the cell frequency used by the network device.

In some optional implementations, the determining unit 402 is further configured to determine one or more different frequencies for search on the basis of inter-frequency search assistance information in a system broadcast message, in response to determining on the basis of the value of the first bit that the terminal device is barred from camping on the network provided by the network device,
wherein the one or more different frequencies refer to one or more frequencies that are different from the cell frequency used by the network device.

In some optional implementations, the inter-frequency search assistance information includes at least one of the following information of the one or more different frequencies:
frequency identification information, at least one piece of PCI information associated with the frequency identification information, SCS information associated with the frequency identification information, frequency-band identification information associated with the frequency identification information, measurement window configuration information associated with the frequency identification information, or measurement window configuration correction assistance information associated with the frequency identification information.

It should be understood by a person skilled in the art that the relevant description of the apparatus for configuring access control information in the embodiment of the present disclosure may be understood with reference to the relevant description of the methods for configuring access control information in the embodiments of the present disclosure.

Fig. 5 is a second schematic structural composition diagram of an apparatus for configuring access control information according to an embodiment of the present disclosure, which is applied to a network device. As shown in Fig. 5, the apparatus for configuring access control information includes:
a sending unit 501 configured to send access control information to a terminal device, the access control information including camping indication information and/or at least one access control parameter, wherein the access control information is used to perform an access control operation on the basis of a terminal type.

In some optional implementations, the camping indication information is configured according to granularity of a cell, or the camping indication information is configured according to granularity of a network identifier.

In some optional implementations, the network identifier includes at least one of the following: a PLMN identifier, an SNPN identifier, or a CAG identifier.

In some optional implementations, each of the at least one access control parameter includes at least one of the following:
a first parameter for determining whether a single access attempt has passed; or
a second parameter for determining a length of time from a time point when an access attempt is barred to a time point when another access attempt is initiated.

In some optional implementations, the camping indication information includes at least one bit, each of the at least one bit is associated with at least one terminal type, and a value of the bit indicates whether a terminal device corresponding to the at least one terminal type associated with the bit can camp on the network provided by the network device.

In some optional implementations, the association between each bit in the camping indication information and the terminal type is a first association;
the first association is predefined; or,
the first association is configured by the network device through AS signaling.

In some optional implementations, when the access control information includes camping indication information and at least one access control parameter,
at least one bit of the camping indication information and the at least one access control parameter have a second association, and the second association includes at least one of the following relationships:
each of the at least one bit is associated with one of the at least one access control parameter; or
one or more of the at least one bit are associated with one of the at least one access control parameter.

In some optional implementations, the second association is predefined; or, the second association is configured by the network device through AS signaling.

It should be understood by a person skilled in the art that the relevant description of the apparatus for configuring access control information in the embodiment of the present disclosure may be understood with reference to the relevant description of the methods for configuring access control information in the embodiments of the present disclosure.

Fig. 6 is a schematic structural diagram of a communication device 600 according to an embodiment of the present disclosure. The communication device may be a terminal device, or may be a network device. The communication device 600 shown in Fig. 6 includes a processor 610. The processor 610 may call and run a computer program from a memory to implement a method in the embodiments of the present disclosure.

Optionally, as shown in Fig. 6, the communication device 600 may also include a memory 620. The processor 610 may call and run a computer program from the memory 620 to implement a method in the embodiments of the present disclosure.

The memory 620 may be one separate component independent of the processor 610, or may be integrated in the processor 610.

Optionally, as shown in Fig. 6, the communication device 600 may further include a transceiver 630. The processor 610 may control the transceiver 630 to perform communication with other devices. Specifically, the transceiver 630 may send information or data to other devices, or receive information or data sent by other devices.

The transceiver 630 may include a transmitter and a receiver. Transceiver 630 may further include an antenna, and the number of antennas may be one or more.

Optionally, the communication device 600 may specifically be a network device of an embodiment of the present disclosure, and the communication device 600 may implement corresponding processes implemented by the network device in the respective methods of the embodiments of the present disclosure, which will not be repeated here for the sake of brevity.

Optionally, the communication device 600 may specifically be a mobile terminal/terminal device of an embodiment of the present disclosure, and the communication device 600 may implement corresponding processes implemented by the mobile terminal/terminal device in the respective methods of the embodiments of the present disclosure, which will not be repeated here for the sake of brevity.

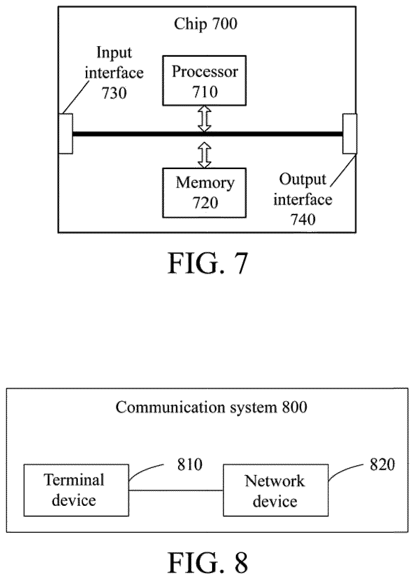

Fig. 7 is a schematic structural diagram of a chip according to an embodiment of the present disclosure. The chip 700 shown in Fig. 7 includes a processor 710. The processor 710 may call and run a computer program from memory to implement a method in the embodiments of the present disclosure.

Optionally, as shown in Fig. 7, the chip 700 may further include a memory 720. The processor 710 may call and run a computer program from the memory 720 to implement a method in the embodiments of the present disclosure.

The memory 720 may be one separate component independent of the processor 710, or may be integrated in the processor 710.

Optionally, the chip 700 may further include an input interface 730. The processor 710 may control the input interface 730 to perform communication with other devices or chips. Specifically, the input interface 730 may obtain information or data sent by other devices or chip.

Optionally, the chip 700 may further include an output interface 740. The processor 710 may control the output interface 740 to perform communication with other devices or chips. Specifically, the output interface 740 may output information or data to other devices or chips.

Optionally, the chip may be applied to a network device in the embodiments of the present disclosure, and the chip may implement corresponding processes implemented by the network device in the respective methods of the embodiments of the present disclosure, which will not be repeated here for the sake of brevity.

Optionally, the chip may be applied to a mobile terminal/terminal device in the embodiments of the present disclosure, and the chip may implement corresponding processes implemented by the mobile terminal/terminal device in the respective methods of the embodiments of the present disclosure, which will not be repeated here for the sake of brevity.

It should be understood that the chip mentioned in the embodiment of the present disclosure may also be referred to as a system-level chip, a system chip, a chip system, or a system-on-chip chip, or the like.

Fig. 8 is a schematic block diagram of a communication system 800 according to an embodiment of the present disclosure. As shown in Fig. 8, the communication system 800 includes a terminal device 810 and a network device 820.

The terminal device 810 may be configured to implement corresponding functions implemented by the terminal device in the methods described above, and the network device 820 may be configured to implement corresponding functions implemented by the network device in the methods described above, which will not be repeated here for the sake of brevity.

It should be understood that the processor in the embodiments of the present disclosure may be an integrated circuit chip with a signal processing capability. During implementation, each operation in the method embodiments described above may be completed by an integrated logic circuit of hardware in a processor or instructions in the form of software. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The various methods, operations, and logical block diagrams disclosed in the embodiments of the present disclosure may be implemented or executed. The general-purpose processor may be a microprocessor, or the processor may also be any conventional processor, etc. The operations of the methods disclosed in combination with the embodiments of the present disclosure may be directly executed and completed by a hardware decoding processor, or executed and completed by a combination of hardware and software modules in the decoding processor. Software modules may be located in a mature storage medium in the present field such as a random access memory, a flash memory, a read-only memory, a programmable read-only memory, an electrically erasable programmable memory, or a register. The storage medium is located in the memory, and the processor reads the information in the memory, and completes the operations of the above methods in combination with its hardware.

It can be understood that the memory in the embodiments of the present disclosure may be a volatile memory or a nonvolatile memory, or may include both volatile and nonvolatile memories. The non-volatile memory may be a Read-Only Memory (ROM), a programmable read-only memory (Programmable ROM, PROM), an erasable programmable read-only memory (Erasable PROM, EPROM), an electrically programmable Erase Programmable Read-Only Memory (Electrically EPROM, EEPROM) or a flash memory. The volatile memory may be Random Access Memory (RAM), which acts as an external cache. By way of example, but not by way of limitation, many forms of RAMs are available, such as static random access memories (Static RAM, SRAM), dynamic random access memories (Dynamic RAM, DRAM), synchronous dynamic random access memories (Synchronous DRAM, SDRAM), double data rate synchronous dynamic random access memories (Double Data Rate SDRAM, DDR SDRAM), enhanced synchronous dynamic random access memories (Enhanced SDRAM, ESDRAM), synchronous link dynamic random access memories (Synchlink DRAM, SLDRAM) and direct memory bus random access memories (Direct Rambus RAM, DR RAM). It should be noted that the memory in the systems and methods described herein is intended to include, but is not limited to, the foregoing and any other suitable type of memory.

It should be understood that the above-mentioned memory is illustrative but not restrictive. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present disclosure is intended to include, but is not limited to, the foregoing and any other suitable type of memory.

A computer-readable storage medium for storing a computer program is further provided in an embodiment of the present disclosure.

Optionally, the computer-readable storage medium may be applied to a network device in the embodiments of the present disclosure, and the computer program causes a computer to perform corresponding processes implemented by the network device in the respective methods of the embodiments of the present disclosure, which will not be repeated here for the sake of brevity.

Optionally, the computer-readable storage medium may be applied to a mobile terminal/terminal device in the embodiments of the present disclosure, and the computer program causes a computer to perform corresponding processes implemented by the mobile terminal/terminal device in the respective methods of the embodiments of the present disclosure, which will not be repeated here for the sake of brevity.

A computer program product including computer program instructions is further provided in an embodiment of the present disclosure.

Optionally, the computer program product may be applied to a network device in the embodiments of the present disclosure, and the computer program instructions cause a computer to perform corresponding processes implemented by the network device in the respective methods of the embodiments of the present disclosure, which will not be repeated here for the sake of brevity.

Optionally, the computer program product may be applied to a mobile terminal/terminal device in the embodiments of the present disclosure, and the computer program instructions cause a computer to perform corresponding processes implemented by the mobile terminal/terminal device in the respective methods of the embodiments of the present disclosure, which will not be repeated here for the sake of brevity.

A computer program is further provided in an embodiment of the present disclosure.

Optionally, the computer program may be applied to a network device in the embodiments of the present disclosure, and the computer program, when run on a computer, causes the computer to perform corresponding processes implemented by the network device in the respective methods of the embodiments of the present disclosure, which will not be repeated here for the sake of brevity.

Optionally, the computer program may be applied to a mobile terminal/terminal device in the embodiments of the present disclosure, and the computer program, when run on a computer, causes the computer to perform corresponding processes implemented by the mobile terminal/terminal device in the respective methods of the embodiments of the present disclosure, which will not be repeated here for the sake of brevity.

A person skilled in the art can appreciate that the units and algorithm steps of the examples described in combination with the embodiments disclosed herein can be implemented by electronic hardware, or a combination of computer software and electronic hardware. These functions are executed in hardware or software, depending on the specific applications and design constraints of the technical solutions. A professional skilled person may use different methods for each specific application to implement the described functions, but said implementation should not be considered to exceed the scope of the present disclosure.

It can be clearly understood by a person skilled in the art that for the convenience and brevity of the description, reference may be made to the corresponding processes in the foregoing method embodiments for the specific working process of the systems, apparatuses and units described above, which will not be repeated here.

In several embodiments provided by the present disclosure, it should be understood that the disclosed systems, apparatuses, and methods may be implemented by other means. For example, the apparatus embodiments described above are merely illustrative. For example, the division of the units is only a logical function division. During actual implementation, there may be other division methods. For example, a plurality of units or components may be combined or integrated into another system, or some features may be ignored or not implemented. In another point, the displayed or discussed coupling or direct coupling or communication connections may be through some interfaces, and the indirect coupling or communication connections of apparatuses or units may be in electrical, mechanical, or other forms.

The units described as separate components may or may not be physically separated, and the components displayed as units may or may not be physical units, that is, they may be located in one place, or may be distributed to a plurality of network units. A part or all of the units may be selected according to actual needs to achieve the objective of the solution of the present embodiment.

In addition, the functional units in various embodiments of the present disclosure may be integrated in one processing unit, or each unit may be individually physically present, or two or more units may be integrated into one unit.

If the functions described above are implemented in the form of software function units and sold or used as separate products, they may be stored in a computer-readable storage medium. On the basis of such understanding, a part of the technical solutions of the present disclosure that essentially contributes to the prior art, or a part of the technical solutions may be embodied in the form of a software product, and the computer software product is stored in a storage medium, including several instructions used for making a computer device (which may be a personal computer, a server, a network device or the like) perform all or part of the operations of the methods described in the various embodiments of the present disclosure. The forgoing storage medium includes: a U disk, a mobile hard disk, a Read-Only Memory (ROM), a Random Access Memory (RAM), a magnetic disk, an optical disk, or other media that can store program codes.

The detailed description of the present disclosure are merely described above, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

## Claims

1. A method for configuring access control information, the method comprising:
receiving, by a terminal device, access control information sent by a network device, the access control information including at least one of the following:
camping indication information; or
at least one access control parameter,
wherein the access control information is used for the terminal device to perform an access control operation on the basis of a terminal type.

2. The method according to claim 1, wherein
the camping indication information is configured according to granularity of a cell; or,
the camping indication information is configured according to granularity of a network identifier.

3. The method according to claim 2, wherein the network identifier comprises at least one of the following: a public land mobile network (PLMN) identifier, a stand-alone non-public network (SNPN) identifier, or a closed access group (CAG) identifier.

4. The method according to any one of claims 1 to 3, wherein each of the at least one access control parameter includes at least one of the following:
a first parameter for determining whether a single access attempt has passed; or
a second parameter for determining a length of time from a time point when an access attempt is barred to a time point when another access attempt is initiated.

5. The method according to any one of claims 1 to 4, wherein the camping indication information includes at least one bit, each of the at least one bit is associated with at least one terminal type, and a value of the bit indicates whether a terminal device corresponding to the at least one terminal type associated with the bit can camp on a network provided by the network device.

6. The method according to claim 5, wherein the association between each bit in the camping indication information and the terminal type is a first association;
the first association is predefined; or,
the first association is configured by a network side through access stratum (AS) signaling.

7. The method according to claim 6, wherein the method further comprises:
determining, by the terminal device, that the terminal type of the terminal device is a first terminal type;
determining, by the terminal device, on the basis of the first association, that the first terminal type is associated with a first bit in the camping indication information; and
determining, by the terminal device, on the basis of the value of the first bit, whether the terminal device can camp on the network provided by the network device.

8. The method according to claim 7, wherein determining, by the terminal device, that the terminal type of the terminal device is the first terminal type comprises:
determining, by the terminal device, on the basis of a capability supported by the terminal device, that the terminal type of the terminal device is the first terminal type; or,
determining, by the terminal device,, on the basis of predefined information, that the terminal type of the terminal device is the first terminal type.

9. The method according to claim 8, wherein the capability supported by the terminal device includes at least one of the following:
a maximum transmission power level supported by the terminal device;
an application scenario supported by the terminal device;
a dual connectivity capability supported by the terminal device;
a carrier aggregation capability supported by the terminal device;
a bandwidth combination capability supported by the terminal device;
a bandwidth supported by the terminal device;
whether the terminal device supports receiving a service in an operator network subscribed by the terminal device;
a number of transmitting antennas supported by the terminal device; or
a number of receiving antennas supported by the terminal device.

10. The method according to claim 7, wherein determining, by the terminal device, that the terminal type of the terminal device is the first terminal type comprises:
receiving, by the terminal device, non-access stratum (NAS) signaling sent by a network side, the NAS signaling indicating that the terminal type of the terminal device is the first terminal type; and
determining, by the terminal device, on the basis of the NAS signaling, that the terminal type of the terminal device is the first terminal type.

11. The method according to any one of claims 7 to 10, wherein when the access control information includes the camping indication information and at least one access control parameter,
at least one bit of the camping indication information and the at least one access control parameter have a second association, the second association including at least one of the following relationships:
each of the at least one bit is associated with one of the at least one access control parameter; or
one or more of the at least one bit are associated with one of the at least one access control parameter.

12. The method according to claim 11, wherein
the second association is predefined; or,
the second association is configured by a network side through AS signaling.

13. The method according to claim 11 or 12, wherein the method further comprises:
in response to determining, on the basis of the value of the first bit, that the terminal device can camp on the network provided by the network device, determining, by the terminal device,, on the basis of the second association, that the first bit is associated with a first access control parameter of the at least one access control parameter; and
determining, by the terminal device, on the basis of the first access control parameter, whether an access attempt has passed, and sending, by the terminal device, a signal to the network device in response to the access attempt having passed.

14. The method according to claim 11 or 12, wherein the method further comprises:
in response to determining, on the basis of the value of the first bit, that the terminal device is barred from camping on the network provided by the network device, determining, by the terminal device, on the basis of intra-frequency search indication information in a system broadcast message, whether an intra-frequency search is allowed;
in response to determining that the intra-frequency search is allowed, performing, by the terminal device, the intra-frequency search;
wherein in response to determining that the intra-frequency search is not allowed, the terminal device is barred from the intra-frequency search within a period of time;
wherein the intra-frequency refers to a same frequency as a cell frequency used by the network device.

15. The method according to claim 11 or 12, wherein the method further comprises:
in response to determining, on the basis of the value of the first bit, that the terminal device is barred from camping on the network provided by the network device, determining, by the terminal device, on the basis of protocol regulations, that an intra-frequency search is not allowed, the terminal device being barred from the intra-frequency search within a period of time;
wherein the intra-frequency refers to a same frequency as a cell frequency used by the network device.

16. The method according to any one of claims 11, 12, 14 and 15, wherein the method further comprises:
in response to determining, on the basis of the value of the first bit, that the terminal device is barred from camping on the network provided by the network device, determining, by the terminal device, on the basis of inter-frequency search assistance information in the system broadcast message, one or more different frequencies for search;
wherein the one or more different frequencies refer to one or more frequencies that are different from the cell frequency used by the network device.

17. The method according to claim 16, wherein the inter-frequency search assistance information includes at least one of the following information of the one or more different frequencies:
frequency identification information, at least one piece of physical cell identifier (PCI) information associated with the frequency identification information, sub-carrier spacing (SCS) information associated with the frequency identification information, frequency-band identification information associated with the frequency identification information, measurement window configuration information associated with the frequency identification information, or measurement window configuration correction assistance information associated with the frequency identification information.

18. A method for configuring access control information, the method comprising:
sending access control information by a network device to a terminal device, the access control information including at least one of the following:
camping indication information; or
at least one access control parameter,
wherein the access control information is used to perform an access control operation on the basis of terminal type.

19. The method according to claim 18, wherein
the camping indication information is configured according to granularity of a cell; or,
the camping indication information is configured according to granularity of a network identifier.

20. The method according to claim 19, wherein the network identifier includes at least one of the following: a public land mobile network (PLMN) identifier, a stand-alone non-public network (SNPN) identifier, or a closed access group (CAG) identifier.

21. The method according to any one of claims 18 to 20, wherein each of the at least one access control parameter includes at least one of the following:
a first parameter, the first parameter for determining whether a single access attempt has passed; or
a second parameter, the second parameter for determining a length of time from a time point when an access attempt is barred to a time point when another access attempt is initiated.

26. An apparatus for configuring access control information, which is applied to a terminal device, the apparatus comprising:
a receiving unit configured to receive access control information sent by a network device, the access control information including at least one of the following:
camping indication information; or
at least one access control parameter,
wherein the access control information is used for a terminal device to perform an access control operation on the basis of terminal type.

27. The apparatus according to claim 26, wherein
the camping indication information in response to determining in response to determining is configured according to granularity of a cell; or,
the camping indication information is configured according to granularity of a network identifier.

28. The apparatus according to claim 27, wherein the network identifier includes at least one of the following: a public land mobile network (PLMN) identifier, a stand-alone non-public network (SNPN) identifier, or a closed access group (CAG) identifier.

29. The apparatus according to any one of claims 26 to 28, wherein each of the at least one access control parameter includes at least one of the following:
a first parameter, the first parameter for determining whether a single access attempt has passed; or
a second parameter, the second parameter for determining a length of time from a time point when an access attempt is barred to a time point when another access attempt is initiated.

30. The apparatus according to any one of claims 26 to 29, wherein the camping indication information includes at least one bit, each of the at least one bit is associated with at least one terminal type, and a value of the bit indicates whether a terminal device corresponding to the at least one terminal type associated with the bit can camp on a network provided by the network device.

31. The apparatus according to claim 30, wherein the association between each bit in the camping indication information and the terminal type is a first association;
the first association is predefined; or,
the first association is configured by a network side through AS signaling.

32. The apparatus according to claim 31, wherein the apparatus further comprises:
a determining unit configured to determine that the terminal type of the terminal device is a first terminal type; determine, on the basis of the first association, that the first terminal type is associated with a first bit in the camping indication information; and determine, on the basis of the value of the first bit, whether the terminal device can camp on the network provided by the network device.

33. The apparatus according to claim 32, wherein the determining unit is configured to determine, on the basis of a capability supported by the terminal device, that the terminal type of the terminal device is the first terminal type; or determine, on the basis of predefined information, that the terminal type of the terminal device is the first terminal type.

34. The apparatus according to claim 33, wherein the capability supported by the terminal device includes at least one of the following:
a maximum transmission power level supported by the terminal device;
an application scenario supported by the terminal device;
a dual connectivity capability supported by the terminal device;
a carrier aggregation capability supported by the terminal device;
a bandwidth combination capability supported by the terminal device;
a bandwidth supported by the terminal device;
whether the terminal device supports receiving a service in an operator network subscribed by the terminal device;
a number of transmitting antennas supported by the terminal device; or
a number of receiving antennas supported by the terminal device.

35. The apparatus according to claim 32, wherein
the receiving unit is further configured to receive NAS signaling sent by a network side, the NAS signaling indicating that the terminal type of the terminal device is the first terminal type; and
the determining unit is configured to determine, on the basis of the NAS signaling, that the terminal type of the terminal device is the first terminal type.

36. The apparatus according to any one of claims 32 to 35, wherein when the access control information includes the camping indication information and the at least one access control parameter,
at least one bit of the camping indication information and the at least one access control parameter have a second association, the second association including at least one of the following relationships:
each of the at least one bit is associated with one of the at least one access control parameter; or
one or more of the at least one bit are associated with one of the at least one access control parameter.

37. The apparatus according to claim 36, wherein
the second association is predefined; or,
the second association is configured by a network side through AS signaling.

38. The apparatus according to claim 36 or 37, wherein the determining unit is further configured to determine, on the basis of the second association, that the first bit is associated with a first access control parameter of the at least one access control parameter, in response to determining, on the basis of the value of the first bit that the terminal device can camp on the network provided by the network device;
the apparatus further comprises: an access unit configured to determine, on the basis of the first access control parameter, whether an access attempt has passed, and send a signal to the network device in response to the access attempt having passed.

39. The apparatus according to claim 36 or 37, wherein the determining unit is further configured to determine, on the basis of intra-frequency search indication information in a system broadcast message, whether an intra-frequency search is allowed, in response to determining on the basis of the value of the first bit that the terminal device is barred from camping on the network provided by the network device,
the apparatus further comprises: a search unit configured to perform the intra-frequency search in response to determining that the intra-frequency search is allowed; wherein the terminal device is barred from the intra-frequency search within a period of time in response to determining that the intra-frequency search is not allowed;
wherein the intra-frequency refers to a same frequency as a cell frequency used by the network device.

40. The apparatus according to claim 36 or 37, wherein the determining unit is further configured to determine, on the basis of protocol regulations, that an intra-frequency search is not allowed, in response to determining on the basis of the value of the first bit that the terminal device is barred from camping on the network provided by the network device; and
the apparatus further comprises: a search unit configured to bar the intra-frequency search within a period of time;
wherein the intra-frequency refers to a same frequency as a cell frequency used by the network device.

41. The apparatus according to any one of claims 36, 37, 39, and 40, wherein the determining unit is further configured to determine, on the basis of inter-frequency search assistance information in a system broadcast message, one or more different frequencies for search, in response to determining on the basis of the value of the first bit that the terminal device is barred from camping on the network provided by the network device;
wherein the one or more different frequencies refer to one or more frequencies that are different from the cell frequency used by the network device.

42. The apparatus according to claim 41, wherein the inter-frequency search assistance information includes at least one piece among the following information of the one or more different frequencies;
frequency identification information, at least one piece of PCI information associated with the frequency identification information, SCS information associated with the frequency identification information, frequency-band identification information associated with the frequency identification information, measurement window configuration information associated with the frequency identification information, or measurement window configuration correction assistance information associated with the frequency identification information.

43. An apparatus for configuring access control information, which is applied to a network device, the apparatus comprising:
a sending unit configured to send access control information to a terminal device, the access control information including at least one of the following:
camping indication information; or
at least one access control parameter,
wherein the access control information is used to perform an access control operation on the basis of terminal type.

44. The apparatus according to claim 43, wherein
the camping indication information is configured according to granularity of a cell; or,
the camping indication information is configured according to granularity of a network identifier.

45. The apparatus according to claim 44, wherein the network identifier includes at least one of the following: a public land mobile network (PLMN) identifier, a stand-alone non-public network (SNPN) identifier, or a closed access group (CAG) identifier.

46. The apparatus according to any one of claims 43 to 45, wherein each of the at least one access control parameter includes at least one of the following:
a first parameter, the first parameter for determining whether a single access attempt has passed; or
a second parameter, the second parameter for determining a length of time from a time point when an access attempt is barred to a time point when another access attempt is initiated.

47. The apparatus according to any one of claims 43 to 46, wherein the camping indication information includes at least one bit, each of the at least one bit is associated with at least one terminal type, and a value of the bit indicates whether a terminal device corresponding to the at least one terminal type associated with the bit can camp on a network provided by a network device.

48. The apparatus according to claim 47, wherein an association between each bit in the camping indication information and the terminal type is a first association;
the first association is predefined; or,
the first association is configured by the network device through AS signaling.

49. The apparatus according to claim 47 or 48, wherein when the access control information includes the camping indication information and the at least one access control parameter,
at least one bit of the camping indication information and the at least one access control parameter have a second association, the second association including at least one of the following relationships:
each of the at least one bit is associated with one of the at least one access control parameter; or
one or more of the at least one bit are associated with one of the at least one access control parameter.

50. The apparatus according to claim 49, wherein
the second association is predefined; or,
the second association is configured by the network device through AS signaling.

51. A terminal device, comprising: a processor and a memory storing a computer program, wherein the processor is configured to call and run the computer program stored in the memory to perform the method according to any one of claims 1 to 17.

52. A network device, comprising: a processor and a memory storing a computer program, and the processor is configured to call and run the computer program stored in the memory to perform the method according to any one of claims 18 to 25.

53. A chip, comprising: a processor configured to call and run a computer program from a memory, to enable a device installed with the chip to perform the method according to any one of claims 1 to 17.

54. A chip, comprising: a processor for invoking and running a computer program from a memory, to enable a device installed with the chip to perform the method according to any one of claims 18 to 25.

55. A computer-readable storage medium for storing a computer program, the computer program causing a computer to perform the method according to any of claims 1 to 17.

56. A computer-readable storage medium for storing a computer program, the computer program causing a computer to perform the method according to any of claims 18 to 25.

57. A computer program product, comprising computer program instructions, the computer program instructions causing a computer to perform the method according to any of claims 1 to 17.

58. A computer program product, comprising computer program instructions, the computer program instructions causing a computer to perform the method according to any of claims 18 to 25.

59. A computer program, that causes a computer to perform the method according to any of claims 1 to 17.

60. A computer program, that causes a computer to perform the method according to any of claims 18 to 25.
